# EUROPÄISCHE PATENTANMELDUNG

(11) **EP 1 792 686 A1**
(43) Veröffentlichungstag der Anmeldung: **06.06.2007**
(21) Anmeldenummer: 05111612.7
(22) Anmeldetag: 02.12.2005
(51) Int. Cl.: B23K 35/363, B23K 103/10, B23K 101/14

(54) **Modifiziertes Flussmittel zum Aluminiumlöten**

(71) Anmelder: Solvay Fluor GmbH, 30173 Hannover (DE)
(72) Erfinder: Böse, Olaf Dr., 30167 Hannover (DE); Swidersky, Hans-Walter Dr, 30175 Hannover (DE)
(74) Vertreter: Fischer, Reiner

(57) **Zusammenfassung**

Die Erfindung betrifft modifizierte Flussmittel auf Basis von Alkalifluoroaluminaten, die zusätzlich eine katalytisch wirksame Substanz, eine Verbindung oder ein Gemisch zum Abbau von bodennahem Ozon enthalten. Die katalytisch wirksame Substanz, insbesondere Edelmetalle oder Übergangsmetalloxide, kann mit dem Flussmittel oder der Flussmittelzubereitung vermischt werden oder vor oder während der Flussmittelherstellung in die Reaktionsmischung eingetragen werden.

Durch das gemeinsame Aufbringen von Flussmittel und Katalysator wird eine nachtägliche Beschichtung der Bauteile mit einem Katalysatorüberfüssig.

Beim Einsatz derartig ausgeüsteter Bauteile zur Kraftfahrzeugherstellung kann somit zum Abbau des bodennahen Ozons beigetragen werden, wenn das Kraftfahrzeug betrieben wird.

## Beschreibung

Die Erfindung bezieht sich auf modifizierte Flussmittel auf Basis von Alkalimetallfluoroaluminaten zum Löten von Bauteilen aus Aluminium und/oder Aluminiumlegierungen.

Baugruppen von Teilen aus Aluminium oder Aluminiumlegierungen können durch Verlöten dieser Bauteile hergestellt werden. Üblicherweise verwendet man dazu ein Flux auf Basis von komplexen Alkalimetallfluoroaluminaten, welches die Oberfläche der miteinander zu verlötenden Bauteile von oxidischen Anhaftungen befreit.

Zum Löten von Aluminium werden häufig Aluminiumlegierungen mit schmelzpunkterniedrigenden Zusätzen wie Silizium, Kupfer oder Zink eingesetzt. Diese Lote werden entweder als Lotplattierung oder pulverförmig mit dem Flussmittel gemischt und beispielsweise als Lotpaste verwendet. In neueren Verfahren werden anstelle der Lotlegierungen dem Flussmittel auch Stoffe zugesetzt, die mit dem Aluminium des Bauteiles, bzw. des Werkstückes reagieren, wodurch während des Erwärmens in situ eine flüssige Phase einer Aluminiumlotlegierung entsteht und dadurch die Lötverbindung hergestellt wird.

Die fertig gelöteten Bauteile werden üblicherweise in separaten Arbeitsgängen zur Oberflächenbehandlung mit Korrosioninhibitoren oder mit katalytisch wirkenden Verbindungen oder Materialien beschichtet. Die Beschichtung mit Katalysatoren soll beispielsweise dazu beitragen, dass beim Einsatz der Bauteile im Kraftfahrzeugbau das bodennahe Ozon zerstört werden kann, wenn das so ausgerüstete Kraftfahrzeug in Betrieb ist.

Es sind eine Reihe von Verfahren zur Oberflächenbehandlung von Aluminium bekannt. Die US 5 795 659 beschreibt die Behandlung von Aluminiumoberflächen mit beispielsweise Zirkonium, Hafnium, Rhenium, Mangan oder Titan um die Korrosionsfestigkeit der Bauteile zu erhöhen.

Gemäß WO 03/076123 wird als Flussmittel Kaliumfluoroaluminat verwendet. Dem Flussmittel wird hier Zirkoniumfluorid und/oder Titanfluorid zugesetzt. Durch die Verwendung der Zusätze wird der Korrosionsschutz verbessert, wobei keine zusätzliche Vor- oder Nachbehandlung erforderlich ist. Der Korrosionsschutz wird hierbei in einem Arbeitsgang mit dem Aufbringen des Flussmittels aufgetragen.

Ausgehend von diesem Stand der Technik ist es die Aufgabe der Erfindung die Palette der funktionellen und reaktiven Flussmittel zu erweitern und ein modifiziertes Flussmittel zur Verfügung zu stellen.

Erfindungsgemäß wird die Aufgabe durch ein Flussmittel oder eine Flussmittelzubereitung auf Basis von Alkalimetallfluoroaluminaten gelöst, die zusätzlich eine katalytisch wirksame Substanz oder Verbindung oder Gemische zum Abbau von Ozon enthalten.

Als Flussmittel auf Basis von Alkalimetallfluoroaluminate werden vorzugsweise Kaliumfluoroaluminate der allgemeinen Formel KₙAIFₘ, wobei n = 1 bis 3 und m = 4 bis 6 bedeuten, verwendet.

Die Herstellung der Alkalimetallfluoraluminate erfolgt in an sich bekannter Weise. Üblicherweise wird in einem ersten Verfahrensschritt Tonerde-Hydrat mit Flusssäure zu Fluoraluminiumsäure umgesetzt. Diese Fluoraluminiumsäure reagiert in einer Fällstufe mit einer wässrigen Alkalimetallverbindung woraufhin die gewünschten Alkalimetallsalze der komplexen Fluoride des Aluminiums ausgefällt werden. Als Alkalimetallverbindung werden Alkalimetallsalze oder Alkalimetallhydroxide als Einzelsubstanz oder als Alkalimetallsalz- oder Alkalimetallhydroxidmischung in Form ihrer Lösungen oder als Feststoffe verwendet, wobei Alkalimetall für Lithium, Natrium, Kalium, Rubidium oder Caesium, vorzugsweise für Kalium, steht.

Dem Flussmittel kann ein Lotmetall oder eine Lotmetallvorstufe in feinverteilter Form beigemischt sein. Das Flussmittel kann unter Verwendung üblicher Hilfsstoffe als Flussmittelzubereitung eingesetzt werden, die das Flussmittel und die Hilfsstoffe enthält. Hilfsstoffe sind beispielsweise Bindemittel, Flüssigkeiten zur Aufschlämmung des Flussmittels oder Dispergiermittel.

Wässrige oder organische Aufschlämmungen enthalten zweckmäßigerweise 10 bis 75 Gew.-% des Flussmittels. Als organische Flüssigkeiten können die üblicherweise als organische Lösungsmittel verwendeten Substanzen wie Alkohole, insbesondere Methanol, Ethanol, Propanol oder Isopropanol oder Polyole eingesetzt werden. Andere geeignete organische Flüssigkeiten sind beispielsweise Pyrrolidone oder Ether, z.B. Diethylenglycolmonobutylether oder Ketone wie Aceton oder Ester von Alkoholen, Diolen oder Polyolen.

Bei der Anwendung als Paste werden dem Flussmittel oder der Flussmittelzubereitung Bindemittel z.B. Ethylcellulose zugesetzt.

Mittels Filmbildnern, gewöhnlich Polymere, die in organischen Lösemitteln, z.B. Aceton löslich sind, können gegebenenfalls gleichzeitig mit dem modifizierten Flussmittel Lotmetall oder Lotmetallvorstufen auf das Werkstück aufgebracht werden. Geeignete Polymere sind z. B. Acrylate, Polyvinyle, Polyamine, Polyene, Polyisoprene oder ähnliche Verbindungen mit entsprechend funktionalisierten organischen Resten. Diese als Filmbildner bezeichneten organischen Verbindungen verdampfen größtenteils während des Lötprozesses.

Als Lotmetall können z.B. Zink, Silizium, Kupfer, Aluminiumzink-, Aluminiumsilizium-Legierungen oder deren Kombinationen oder Lotmetallvorstufen wie z.B. Metallhexafluorosilikat im Flussmittel oder in der Flussmittelzubereitung enthalten sein oder verwendet werden.

Als katalytisch wirksame Substanz, Verbindung oder Mischung im Sinne der Erfindung können alle bekannten zur Zersetzung von Ozon geeigneten katalysierenden Materialien verwendet werden. Hierzu zählen Metalle, wie Titan, Mangan sowie Edelmetalle, insbesondere Palladium, Platin oder Silber, sowie Metalloxide, insbesondere Übergangsmetalloxide oder Gemische solcher Substanzen. Diese Katalysatoren können auch in geträgerter Form, auf Trägermaterial wie beispielsweise Aluminium-, Silizium- und/oder Titanoxide oder Kohlenstoff aufgebracht, Anwendung finden. Als katalytisch wirksame Verbindung sind sehr gut Übergangsmetalloxide und -hydroxide bzw. deren Mischungen, insbesondere Mischungen, die Eisen, Mangan, Kupfer, Nickel oder Palladium enthalten, geeignet.

Erfindungsgemäß wird dem Flussmittel der Ozon abbauende Katalysator in einer Menge von 0,1 bis 30 Gew.-% , bezogen auf die Flussmittelmenge, zugemischt. Um eine gleichmäßige Durchmischung zu gewährleisten ist es von Vorteil, wenn die Partikelgröße des Katalysators 0,1µm < X50 < 30µm beträgt. Das Mischen der Komponenten erfolgt durch übliche Mischmethoden und in üblichen Mischeinrichtungen.

Der Ozon abbauende Katalysator kann aber auch in der genannten Konzentration während oder vor der Synthese des Flussmittels zu den Reaktionspartnern hinzugefügt werden. Es ist ebenfalls im Sinne der Erfindung, dass der Katalysator zum Synthesebeginn vorliegt oder simultan während der Synthese gebildet wird. Hierbei ist jedoch darauf zu achten, dass sich die Synthesebedingungen des Flussmittels nicht negativ auf die Aktivität des Katalysators auswirken.

Da erfindungsgemäß die katalytisch wirksame Substanz, Verbindung oder Mischung dem Flussmittel in feinverteilter Form beigemischt ist, bzw. im Flussmittel enthalten ist und somit direkt auf das zu verlötende Bauteil aufgetragen wird, ist die Wahl der katalytisch wirksamen Materialien insbesondere durch die Lötbedingungen begrenzt. Die katalytische Aktivität dieser Materialien soll durch die Löttemperatur nicht beeinträchtigt werden. Besonders geeignet ist in diesem Zusammenhang die Verwendung von Edelmetallen und Übergangsmetalloxiden als katalytisch wirksames Material.

Es wurde gefunden, dass durch das gemeinsame Aufbringen von Flussmittel und Katalysator eine nachträgliche Beschichtung der Bauteile, insbesondere eine nachträgliche Beschichtung, beispielsweise eines Wärmetauschers, mit einem Katalysator überflüssig ist und somit dieser zusätzliche Behandlungsschritt der Bauteile eingespart werden kann. Durch das gemeinsame Aufbringen von Flussmittel und Katalysator vor oder während des Lötprozesses erfolgt eine homogene katalytisch wirksame Beschichtung der Bauteile, die zum Abbau des bodennahen Ozons beiträgt, wenn der Wärmetauscher beispielsweise in Fahrzeuge eingebaut wird.

Im Kraftfahrzeugbau wird diese Wirkung genutzt indem man die, mit dem erfindungsgemäßen Flussmittel beschichteten bzw. gelöteten Bauteile zur Herstellung von Fahrzeugen einsetzt. Die katalytische Wirkung entfaltet sich insbesondere dann wenn die Kraftfahrzeuge in Betrieb sind.

Das erfindungsgemäß modifizierte Flussmittel kann in an sich bekannter Weise auf die zu verbindenden Bauteile aus Aluminium oder Aluminiumlegierungen aufgebracht werden, z.B. durch Sprühen, Streichen oder Tauchen, in Form von wässrigen oder organischen Suspensionen.

Das Aufbringen des modifizierten Flussmittels mittels moderner Technologien wie Plasma- oder Hochgeschwindigkeitssprühbeschichtung ist ebenfalls möglich.

Die Trockenapplikation mittels elektrostatischer Sprühtechnologie ist ebenfalls eine geeignete Methode zum Auftragen des modifizierten Flussmittels.

Die Bauteile können mit üblichen Lötverfahren zum Aluminiumlöten miteinander verbunden werden.

Die Löttemperatur ist unter anderem abhängig vom verwendeten Lot oder dem lotbildenden Metall. Vorzugsweise wird oberhalb des Schmelzpunktes des Lotes bzw. der Umwandlungsphasen des Flussmittels oder seiner Abmischungen gelötet.

Flammlöten oder Ofenlöten, insbesondere unter inerter Atmosphäre, z.B. unter Verwendung von Stickstoff als Schutzgas, sind geeignete Verfahrensprozesse zur Anwendung des modifizierten Flussmittels.

## Patentansprüche

1. Modifiziertes Flussmittel zum Aluminiumlöten auf der Basis von Alkalimetallfluoroaluminaten, **dadurch gekennzeichnet, dass** das Flussmittel eine katalytisch wirksame Ozon abbauende Substanz, Verbindung oder Mischung enthält.

2. Modifiziertes Flussmittel nach Anspruch 1, **dadurch gekennzeichnet, dass** die Ozon abbauende Substanz, Verbindung oder Mischung in einer Menge von 0,1 bis 30 Gew.-%, bezogen auf die Flussmittelmenge, enthalten ist.

3. Modifiziertes Flussmittel nach Anspruch 1, **dadurch gekennzeichnet, dass** das Flussmittel Edelmetalle oder Übergangsmetalloxide oder-hydroxide als katalytisch wirksame Substanz enthält.

4. Modifiziertes Flussmittel nach Anspruch 1, **dadurch gekennzeichnet, dass** das Flussmittel als katalytisch wirksame Substanz Mischungen, die Eisen, Mangan, Kupfer, Nickel oder Palladium enthalten, enthält.

5. Modifiziertes Flussmittel nach Anspruch 1, **dadurch gekennzeichnet, dass** das Flussmittel die katalytisch wirksame Substanz, Verbindung oder Mischung in geträgerter Form, wobei als Trägermaterial beispielsweise Aluminium-, Silicium-, Titanoxide oder Kohlenstoff zur Anwendung kommen, enthält.
